# EUROPÄISCHE PATENTANMELDUNG

(11) **EP 4 797 527 A1**
(43) Veröffentlichungstag der Anmeldung: **26.08.2026**
(21) Anmeldenummer: 26157993.2
(22) Anmeldetag: 11.02.2026
(51) Int. Cl.: H02P 6/32, H02K 19/12

(54) **SCHALTUNGSANORDNUNG ZUR VERSORGUNG EINER ROTORWICKLUNG EINER FREMDERREGTEN SYNCHRONMASCHINE UND SCHALTUNGSANORDNUNG**

(30) Priorität: 25.02.2025 DE 102025107174
(71) Anmelder: Volkswagen Aktiengesellschaft, 38440 Wolfsburg (DE)
(72) Erfinder: KUBE, Adrian, 38440 Wolfsburg (DE)

(57) **Zusammenfassung**

Die Erfindung betrifft eine Schaltungsanordnung (1) zur Versorgung einer Rotorwicklung (2) einer fremderregten Synchronmaschine, umfassend eine Brückenschaltung mit mindestens zwei aktiven Halbleiterschaltern (T1 - T4), wobei in dem Brückenzweig (3) die Rotorwicklung (2) und mindestens eine in Reihe zur Rotorwicklung (2) geschaltete Induktivität (4) angeordnet sind, wobei die Induktivität (4) eine Primärinduktivität (5) eines Transformators (6) ist, wobei eine Sekundärinduktivität (7) des Transformators (6) mit einem Eingang eines DC/DC-Wandlers (8) verbunden ist, wobei am Ausgang des DC/DC-Wandlers (8) ein Speicherelement (9) für eine Gleichspannung angeordnet ist.

## Beschreibung

Die Erfindung betrifft eine Schaltungsanordnung zur Versorgung einer Rotorwicklung einer fremderregten Synchronmaschine und eine übergeordnete Schaltungsanordnung.

Fremderregte Synchronmaschinen dienen beispielsweise als Elektromaschinen im Traktionsstrang von Elektrofahrzeugen. Dabei wird die Rotorwicklung mit Gleichstrom bestromt. Dabei wird der Gleichstrom mittels einer Brückenschaltung aus der Spannung der Hochvoltbatterie erzeugt. Dabei kann die Brückenschaltung vier aktive Halbleiterschalter aufweisen, die je nach gewünschter Stromrichtung diagonal gepulst angesteuert werden, sodass sich im Mittel die gewünschte Stromstärke einstellt. Soll die Stromrichtung durch die Rotorwicklung nicht umkehrbar sein, so reichen zwei diagonal gegenüberliegende Halbleiterschalter, wobei die anderen Elemente in den Halbbrücken Dioden sein können. Durch die Taktung der Halbleiterschalter entstehen Rippel, die Störstrahlung erzeugen. Dabei ist die Induktivität der Rotorwicklung frequenzabhängig, sodass diese in bestimmten Frequenzbereichen nahezu null ist, sodass die Stromänderungen sehr groß werden können. Daher ist es bekannt, eine zusätzliche Induktivität in Reihe zur Rotorwicklung zu schalten, die die Stromänderungen drosselt. Diese Zusatzinduktivität ist relativ groß und teuer.

Der Erfindung liegt das technische Problem zugrunde, eine Schaltungsanordnung zur Versorgung einer Rotorwicklung einer fremderregten Synchronmaschine zu schaffen, bei der das Problem der Störstrahlung reduziert ist. Ein weiteres technisches Problem ist die Schaffung einer übergeordneten Schaltungsanordnung mit einer Schaltungsanordnung für eine fremderregte Synchronmaschine und einer Schaltungsanordnung für ein Niederspannungsbordnetz.

Die Lösung des technischen Problems ergibt sich durch eine Schaltungsanordnung mit den Merkmalen des Anspruchs 1 sowie eine Schaltungsanordnung mit den Merkmalen des Anspruchs 5. Weitere vorteilhafte Ausgestaltungen der Erfindung ergeben sich aus den Unteransprüchen.

Die Schaltungsanordnung zur Versorgung einer Rotorwicklung einer fremderregten Synchronmaschine umfasst eine Brückenschaltung mit mindestens zwei aktiven Halbleiterschaltern, wobei in dem Brückenzweig die Rotorwicklung und mindestens eine in Reihe zur Rotorwicklung geschaltete Induktivität angeordnet sind. Dabei ist die Induktivität als eine Primärinduktivität eines Transformators ausgebildet, wobei eine Sekundärinduktivität des Transformators mit einem Eingang eines DC/DC-Wandlers verbunden ist, wobei am Ausgang des DC/DC-Wandlers ein Speicherelement für eine Gleichspannung angeordnet ist. Hierdurch werden die Rippel stark gedämpft und deren Energie als Gleichspannung gespeichert, wobei die Gleichspannung zur Versorgung von elektrischen Verbrauchern nutzbar ist. Beispielsweise kann die Spannung zur Versorgung des DC/DC-Wandlers genutzt werden und/oder als redundante Spannungsversorgung für andere Verbraucher, was später noch näher erläutert wird. Ein weiterer Vorteil ist, dass die Primärinduktivität kleiner ausgebildet werden kann. Der Transformator wirkt dabei wie ein EMV-Filter. Das Speicherelement ist beispielsweise eine Batterie oder ein Kondensator (z.B. als Super-Cap ausgebildet). Der DC/DC-Wandler ist beispielsweise ein Boost-, ein Buck-, ein Buck-Boost- oder ein Sepic-Konverter.

In einer weiteren Ausführungsform ist an einem Mittelabgriff zwischen Rotorwicklung und Induktivität eine Reihenschaltung aus mindestens einem Kondensator und mindestens einem Widerstand angeordnet, wobei der Mittelabgriff zwischen Kondensator und Widerstand mit einem Steuereingang des DC/DC-Wandlers verbunden ist. Durch die Reihenschaltung wird die anliegende Wechselspannung aufgrund der Rippel gemessen. Hierdurch kann dann der DC/DC-Wandler zielgerichtet eingeschaltet werden, wenn die Spannung ausreichend groß ist. Alternativ kann auch eine Diode verwendet werden, die dann aufgrund der Wechselspannung die Flußspannung erreicht. Ziel ist es, den DC/DC-Wandler nur zu schalten, wenn die Spannung am Eingang des DC/DC-Wandlers ausreichend groß ist, um so die Wandlerverluste zu reduzieren.

In einer weiteren Ausführungsform ist die Rotorwicklung eine Primärinduktivität eines zweiten Transformators, dessen zweite Sekundärinduktivität in Reihe oder parallel zur Sekundärinduktivität des ersten Transformators geschaltet ist. Somit wird zusätzliche Störenergie ausgekoppelt, wobei bei der Parallelschaltung der Strom und in der Reihenschaltung die Spannung am DC/DC-Wandler erhöht wird.

In einer weiteren Ausführungsform ist die zweite Sekundärinduktivität eine unbenutzte Statorwicklung der Synchronmaschine, so dass keine weiteren zusätzlichen Bauteile benötigt werden.

Weiter wird eine Schaltungsanordnung offenbart, umfassend eine Schaltungsanordnung für eine fremderregte Synchronmaschine und eine Schaltungsanordnung für ein Niederspannungsbordnetz. Die Schaltungsanordnung für die fremderregte Synchronmaschine weist eine Schaltungsanordnung für die Statorwicklungen, eine Schaltungsanordnung für eine Rotorwicklung und mindestens eine Ansteuerschaltung auf. Die Schaltungsanordnung für das Niederspannungsbordnetz weist mindestens einen DC/DC-Wandler und eine Ansteuerschaltung auf. Dabei ist die Schaltungsanordnung für eine Rotorwicklung wie zuvor beschrieben ausgebildet, d.h. weist mindestens einen Transformator, einen DC/DC-Wandler und ein Speicherelement auf.

In einer weiteren Ausführungsform ist das Speicherelement eine redundante Spannungsversorgung für den DC/DC-Wandler und/oder die Ansteuerschaltung der Schaltungsanordnung für das Niederspannungsbordnetz. Typischerweise befinden sich die Schaltungsanordnung für das Niederspannungsbordnetz und die Schaltungsanordnung für die Ansteuerschaltung der fremderregten Synchronmaschine auf getrennten Leiterplatten, sodass dadurch eine redundante Spannungsversorgung über die Leiterplatten hinweg erfolgt.

In einer weiteren Ausführungsform ist das Speicherelement auch eine redundante Spannungsversorgung für die Ansteuerschaltung der fremderregten Synchronmaschine.

In einer weiteren Ausführungsform ist die Schaltungsanordnung in einem gemeinsamen Gehäuse angeordnet, so dass sehr kurze Verbindungswege realisiert werden können und insbesondere die Gefahr von Kabelbrüchen zwischen den verschiedenen Schaltungsanordnungen reduziert werden kann.

In einer weiteren Ausführungsform weist der DC/DC-Wandler der Schaltungsanordnung für das Niederspannungsbordnetz einen Ausgangsanschluss für eine Niedervolt-Speichereinheit auf, wobei die Niedervolt-Speichereinheit eine Spannungsversorgung für die Ansteuerschaltungen ist. Dabei kann die Niedervolt-Speichereinheit beispielsweise eine Batterie oder ein Kondensator für 12, 24, 36 oder 48 V sein. Die Niedervolt-Speichereinheit kann dabei außen an dem Gehäuse befestigt sein, sodass die Verbindungswege kurz sind.

Die Erfindung kommt vorzugsweise in einem Traktionsnetz eines Elektrofahrzeuges zum Einsatz.

Die Erfindung wird nachfolgend anhand bevorzugter Ausführungsbeispiele näher erläutert. Die Fig. zeigen:
- Fig. 1: eine schematische Schaltungsanordnung zur Versorgung einer Rotorwicklung einer Rotorwicklung einer fremderregten Synchronmaschine und
- Fig. 2: eine schematische Schaltungsanordnung, umfassend eine Schaltungsanordnung für eine fremderregte Synchronmaschine und eine Schaltungsanordnung für ein Niederspannungsbordnetz.

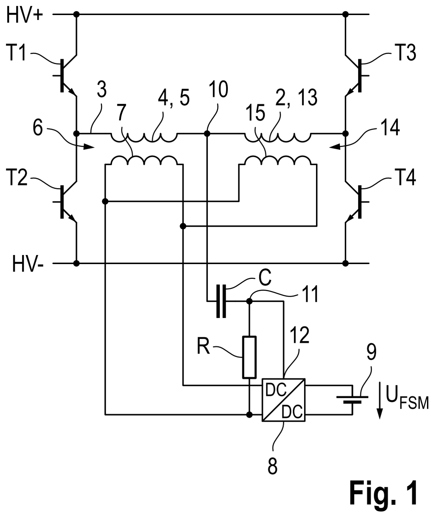

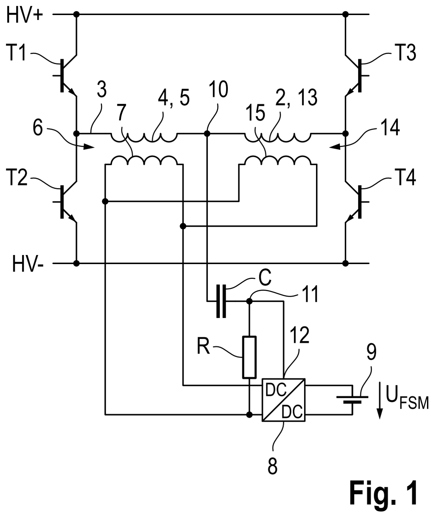

In der Fig. 1 ist eine Schaltungsanordnung 1 zur Versorgung einer Rotorwicklung 2 einer fremderregten Synchronmaschine (nicht dargestellt) gezeigt. Die Schaltungsanordnung 1 weist eine Brückenschaltung auf, die vier aktive Halbleiterschalter T1 - T4 aufweist, wobei in dem Brückenzweig 3 die Rotorwicklung 2 und mindestens eine in Reihe zur Rotorwicklung 2 geschaltete Induktivität 4 angeordnet sind. Im dargestellten Beispiel sind die Halbleiterschalter T1 - T4 als Bipolartransistoren ausgebildet, was Vorteile bezüglich des Sperrverhaltens hat. Prinzipiell können aber auch andere Halbleiterschalter wie GaN HEMTs, MOSFETs oder IGBTs zum Einsatz kommen, solange nur die Sperrfähigkeit gewährleistet ist. Die Brückenschaltung ist mit dem positiven Potential HV+ und dem negativen Potential HV- der Traktionsspannung verbunden. Zum Bestromen der Rotorwicklung 2 mit einem Gleichstrom gewünschter Größe werden jeweils diagonal gegenüberliegenden Halbleiterschalter (z.B. T1 und T4 bzw. T2 und T3) gepulst angesteuert, wobei die anderen Halbleiterschalter sperren. Über die Auswahl der Halbleiterschalter T1, T4 bzw. T2, T3, die gepulst angesteuert werden, kann die Stromrichtung in der Rotorwicklung 2 gewechselt werden. Ist dies nicht notwendig, können zwei diagonal gegenüberliegende Halbleiterschalter (z.B. T2, T3) durch passive Dioden ersetzt werden. Die Induktivität 4 dient dabei dazu, die aufgrund des Pulses entstehenden Rippel zu dämpfen. Die Induktivität 4 ist dabei eine Primärinduktivität 5 eines Transformators 6, wobei eine Sekundärinduktivität 7 des Transformators 6 mit einem Eingang eines DC/DC-Wandlers 8 verbunden ist. Am Ausgang des DC/DC-Wandlers 8 ist ein Speicherelement 9 für eine Gleichspannung angeordnet. An einem Mittelabgriff 10 zwischen Rotorwicklung 2 und Induktivität 4 ist eine Reihenschaltung aus mindestens einem Kondensator C und mindestens einem Widerstand R angeordnet, wobei ein Mittelabgriff 11 zwischen Kondensator C und Widerstand R mit einem Steuereingang 12 des DC/DC-Wandlers 8 verbunden ist. Hierdurch wird die resultierende Wechselspannung aufgrund der Rippel kapazitiv ausgekoppelt. Der DC/DC-Wandler 8 kann dann eingeschaltet werden, wenn die Spannung ausreichend hoch ist (z.B. größer 1 V). Hierdurch werden hohe Wandlerverluste vermieden, die entstehen würden, wenn der DC/DC-Wandler 8 sehr kleine Spannungen auf z.B. 12 V hochsetzen müsste. Das

Speicherelement 9 kann dabei auch die Versorgungsspannung für den DC/DC-Wandler 8 liefern sowie als redundante Spannungsquelle für die anderen Verbraucher dienen. Durch das induktive Auskoppeln der Störenergie in den Rippeln wird der Gleichstrom stark geglättet, sodass der Transformator 6 wie ein EMV-Filter wirkt, der die Störenergie in eine Gleichspannung wandelt und sinnvoll nutzt. Sollte die Schaltungsanordnung 1 einen separaten EMV-Filter noch aufweisen, so kann dieser kleiner dimensioniert werden (oder im Extremfall ganz entfallen). Weiter dargestellt ist, dass auch die Rotorwicklung 2 eine Primärinduktivität 13 eines weiteren Transformators 14 ist, dessen Sekundärinduktivität 15 parallel zur Sekundärinduktivität 7 des ersten Transformators 6 geschaltet ist. Durch diesen zweiten Transformator 14 wird noch mehr Störenergie der Rippel ausgekoppelt. Die Sekundärinduktivitäten 7 und 15 können auch in Reihe geschaltet werden.

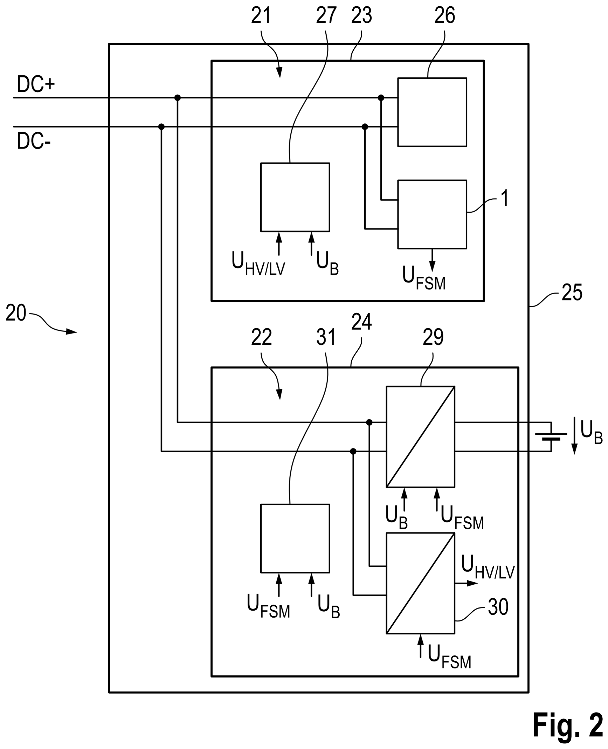

In der Fig. 2 ist schematisch eine Schaltungsanordnung 20 dargestellt, die eine Schaltungsanordnung 21 für eine fremderregte Synchronmaschine und eine Schaltungsanordnung 22 für ein Niederspannungsbordnetz aufweist, die jeweils auf einer Leiterplatte 23, 24 angeordnet sind und in einem gemeinsamen Gehäuse 25 angeordnet sind. Die Schaltungsanordnung 21 für die fremderregte Synchronmaschine weist eine Schaltungsanordnung 26 für die Statorwicklungen, eine Schaltungsanordnung 1 für eine Rotorwicklung 2 (s.a. Fig. 1) und mindestens eine Ansteuerschaltung 27 auf. Die Schaltungsanordnung 22 für das Niederspannungsbordnetz weist mindestens einen galvanisch getrennten DC/DC-Wandler 29, einen Hilfs-DC/DC-Wandler 30 und eine Ansteuerschaltung 31 auf. Der Hilfs-DC/DC-Wandler 30 kann auch in den DC/DC-Wandler 29 integriert sein, wobei dann direkt am Ausgang des DC/DC-Wandlers 29 eine Spannung zur Versorgung der Verbraucher abgegriffen werden kann. Dabei sind Ausgangsanschlüsse 32 des DC/DC-Wandlers 29 mit einer Speichereinheit 33 verbunden, die eine Spannung U_{B} zur Verfügung stellt. Der Hilfs-DC/DC-Wandler 30 stellt eine Spannung U_{HV/LV} zur Verfügung und das Speicherelement 9 der Schaltungsanordnung 1 eine Spannung U_{FSM} (s.a. Fig. 1). Die primäre Spannungsversorgung der Ansteuerschaltungen 27, 31 ist die Spannung U_{B}, wobei die Spannung U_{FSM} die redundante Spannungsversorgung für die Ansteuerschaltung 31 und den Hilfs-DC/DC-Wandler 30 ist. Die redundante Spannungsversorgung für die Ansteuerschaltung 27 ist die Spannung U_{HV/LV}, um so die Schaltungsanordnung 21 bei Ausfall der Speichereinheit 33 anzuwerfen. Prinzipiell kann U_{FSM} auch als weitere redundante Spannungsversorgung für die Ansteuerschaltung 27 verwendet werden.

### Bezugszeichenliste

- 1): Schaltungsanordnung
- 2): Rotorwicklung
- 3): Brückenzweig
- 4): Induktivität
- 5): Primärinduktivität
- 6): Transformator
- 7): Sekundärinduktivität
- 8): DC/DC-Wandler
- 9): Speicherelement
- 10): Mittelabgriff
- 11): Mittelabgriff
- 12): Steuereingang
- 13): Primärinduktivität
- 14): Transformator
- 15): Sekundärinduktivität
- 20): Schaltungsanordnung
- 21): Schaltungsanordnung
- 22): Schaltungsanordnung
- 23): Leiterplatte
- 24): Leiterplatte
- 25): gemeinsames Gehäuse
- 26): Schaltungsanordnung
- 27): Ansteuerschaltung
- 29): DC/DC-Wandler
- 30): Hilfs-DC/DC-Wandler
- 31): Ansteuerschaltung
- 32): Ausgangsanschlüsse
- 33): Speichereinheit
- C): Kondensator
- HV+): positives Potential
- HV-): negatives Potential
- R): Widerstand
- T1 - T4): Halbleiterschalter
- U_{B}): Spannung
- U_{HV/LV}): Spannung
- U_{FSM}): Spannung

## Patentansprüche

1. Schaltungsanordnung (1) zur Versorgung einer Rotorwicklung (2) einer fremderregten Synchronmaschine, umfassend eine Brückenschaltung mit mindestens zwei aktiven Halbleiterschaltern (T1 - T4), wobei in dem Brückenzweig (3) die Rotorwicklung (2) und mindestens eine in Reihe zur Rotorwicklung (2) geschaltete Induktivität (4) angeordnet sind, **dadurch gekennzeichnet, dass**
die Induktivität (4) eine Primärinduktivität (5) eines Transformators (6) ist, wobei eine Sekundärinduktivität (7) des Transformators (6) mit einem Eingang eines DC/DC-Wandlers (8) verbunden ist, wobei am Ausgang des DC/DC-Wandlers (8) ein Speicherelement (9) für eine Gleichspannung angeordnet ist.

2. Schaltungsanordnung nach Anspruch 1, **dadurch gekennzeichnet, dass** an einem Mittelabgriff (10) zwischen Rotorwicklung (2) und Induktivität (4) eine Reihenschaltung aus mindestens einem Kondensator (C) und mindestens einem Widerstand (R) angeordnet ist, wobei ein Mittelabgriff (11) zwischen Kondensator (C) und Widerstand (R) mit einem Steuereingang (12) des DC/DC-Wandlers (8) verbunden ist.

3. Schaltungsanordnung nach einem der vorangegangenen Ansprüche, **dadurch gekennzeichnet, dass** die Rotorwicklung (2) einer Primärinduktivität (13) eines zweiten Transformators (14) ist, dessen zweite Sekundärinduktivität (15) in Reihe oder parallel zur Sekundärinduktivität (7) geschaltet ist.

4. Schaltungsanordnung nach Anspruch 3, **dadurch gekennzeichnet, dass** die zweite Sekundärinduktivität (15) eine unbenutzte Statorwicklung der Synchronmaschine ist.

5. Schaltungsanordnung (20), umfassend eine Schaltungsanordnung (21) für eine fremderregte Synchronmaschine und eine Schaltungsanordnung (22) für ein Niederspannungsbordnetz, wobei die Schaltungsanordnung (21) für die fremderregte Synchronmaschine eine Schaltungsanordnung (26) für die Statorwicklungen, eine Schaltungsanordnung (1) für eine Rotorwicklung (2) und mindestens eine Ansteuerschaltung (27) aufweist und die Schaltungsanordnung (22) für das Niederspannungsbordnetz mindestens einen DC/DC-Wandler (29) und eine Ansteuerschaltung (31) aufweist,
**dadurch gekennzeichnet, dass**
die Schaltungsanordnung (1) für eine Rotorwicklung (2) gemäß einem der Ansprüche 1 bis 4 ausgebildet ist.

6. Schaltungsanordnung nach Anspruch 5, **dadurch gekennzeichnet, dass** das Speicherelement (9) eine redundante Spannungsversorgung für den DC/DC-Wandler (29) und/oder die Ansteuerschaltung (31) für das Niederspannungsbordnetz ist.

7. Schaltungsanordnung nach Anspruch 5 oder 6, **dadurch gekennzeichnet, dass** das Speicherelement (9) eine redundante Spannungsversorgung für die Ansteuerschaltung (2) der fremderregten Synchronmaschine ist.

8. Schaltungsanordnung nach einem der Ansprüche 5 bis 7, **dadurch gekennzeichnet, dass** die Schaltungsanordnung (20) in einem Gehäuse (25) angeordnet ist.

9. Schaltungsanordnung nach einem der Ansprüche 5 bis 8, **dadurch gekennzeichnet, dass** der DC/DC-Wandler (29) einen Ausgangsanschluss (32) für eine Niedervolt-Speichereinheit (33) aufweist, wobei die Niedervolt-Speichereinheit (33) eine Spannungsversorgung für die Ansteuerschaltungen (27, 31) ist.
